# EUROPÄISCHE PATENTSCHRIFT

(11) **EP 1 402 621 B1**
(45) Veröffentlichungstag und Bekanntmachung des Hinweises auf die Patenterteilung: **19.04.2006**
(21) Anmeldenummer: 02727478.6
(22) Anmeldetag: 26.03.2002
(51) Int. Cl.: H02P 7/20

(54) **ANORDNUNG ZUR AUTOMATISCHEN NETZBEEINFLUSSUNG UND MOTORANTRIEB FÜR EINE SOLCHE ANORDNUNG**
ARRANGEMENT FOR AUTOMATICALLY INFLUENCING A MAINS SUPPLY AND MOTOR DRIVE FOR SAID ARRANGEMENT
DISPOSITIF PERMETTANT D'INFLUER AUTOMATIQUEMENT SUR UN RESEAU D'ALIMENTATION ELECTRIQUE ET COMMANDE A MOTEUR CORRESPONDANTE

(30) Priorität: 20.04.2001 DE 10119664
(43) Veröffentlichungstag der Anmeldung: 31.03.2004
(73) Patentinhaber: Maschinenfabrik Reinhausen GmbH, 93059 Regensburg (DE)
(72) Erfinder: DOHNAL, Dieter, 93138 Lappersdorf (DE); ERMISCH, Jochen, 01445 Radebeul (DE); VIERECK, Karsten, 93128 Diesenbach (DE)
(86) Internationale Anmeldenummer: PCT/EP2002/003358
(87) Internationale Veröffentlichungsnummer: WO 2002/086647

(56) Entgegenhaltungen:
- DE-A- 19 837 659
- GB-A- 2 328 041
- US-A- 4 419 619
- US-A- 5 568 398
- US-A- 5 736 827
- US-A- 5 821 716
- ERMISCH J: "20 JAHRE FORSCHUNG AUF DEM GEBIET NICHTKONVENTIONELLER WANDLER" , ELEKTRIE, VEB VERLAG TECHNIK. BERLIN, DD, VOL. 43, NR. 6, PAGE(S) 205-207 XP000039838 ISSN: 0013-5399 das ganze Dokument

## Beschreibung

Die Erfindung betrifft eine Anordnung zur automatischen Beeinflussung elektrischer Energieversorgungs- bzw. -verteilungsnetze, nachfolgend als Netzbeeinflussung bezeichnet, mit einem mit verschiedenen Wicklungsanzapfungen ausgerüsteten Stufentransformator. Die Erfindung betrifft weiterhin einen Motorantrieb zur automatischen Netzbeeinflussung mit einem solchen Stufentransformator.

Zur automatischen Netzbeeinflussung dienen üblicherweise regelbare Leistungstransformatoren, die als Stufentransformatoren ausgebildet sind und über eine Regelwicklung mit verschiedenen Wicklungsanzapfungen verfügen, die von einem Stufenschalter mit einem mechanisch mit diesem gekoppelten Motorantrieb unterbrechungslos beschaltbar sind. Durch die wahlweise Einschaltung unterschiedlicher Wicklungsanzapfungen der Regelwicklung wird eine Änderung des Übersetzungsverhältnisses des Stufentransformators und damit eine Spannungsregelung erreicht.

Üblicherweise besteht eine bekannte Anordnung zur Netzbeeinflussung durch Spannungsregelung aus mehreren Komponenten. Zunächst ist ein Messwandler, vorzugsweise ein induktiver Messtransformator am Stufentransformator, vorgesehen, durch den die jeweils zu regelnde Spannung als Istwert erfasst wird. Weiterhin ist ein Spannungsregler vorgesehen, der, entfernt vom Stufentransformator, in einer Schaltwarte o. dgl. angeordnet ist. Dieser Spannungsregler erhält über elektrische Signalleitungen vom Messwandler dessen elektrisches Ausgangssignal als Information über die gemessene Spannung als Istwert übermittelt. Im Spannungsregler wird dann dieser Istwert der Spannung mit einem vorab eingestellten Sollwert der Spannung, der mittels des Stufentransformators gerade möglichst konstant gehalten werden soll, verglichen, und unter Berücksichtigung weiterer, vorab eingestellter Regelparameter, wie z. B. der Verzögerungszeit, wird erforderlichenfalls ein Schaltbefehl "Höher" oder "Tiefer" generiert. Dieser Schaltbefehl wird, wiederum über elektrische Verbindungsleitungen, an den Motorantrieb des Stufenschalters übermittelt. Abhängig von der Richtung "Höher" oder "Tiefer" des übermittelten Schaltbefehls erzeugt der Motorantrieb eine Drehbewegung seiner Antriebswelle; über das Antriebsgestänge wird diese Drehbewegung auf den Stufenschalter übertragen, der dann, drehrichtungsabhängig, eine Umschaltung von der derzeit beschalteten Wicklungsanzapfung auf die nächst höhere oder nächst niedrigere Wicklungsanzapfung vornimmt. Der Stufenschalter selbst ist üblicherweise in den Kessel des Stufentransformators versenkt oder auch an dessen Außenseite befestigt, ebenso wie der dazugehörige Motorantrieb. Über weitere elektrische Verbindungsleitungen werden vom Motorantrieb bestimmte Informationen, wie z. B. die aktuelle Stellung des Stufenschalters, an den Spannungsregler zurück übermittelt. Eine solche bekannte Anordnung zur Spannungsregelung ist aus der DE-OS 24 10 641 bekannt. Nachteilig bei dieser Anordnung ist, dass der Motorantrieb eine Vielzahl von elektrischen Ausgängen besitzt, die alle mittels separater elektrischer Leitungen mit dem entsprechenden Spannungsregler verbunden werden müssen. Diese Leitungsverbindungen ergeben sich dadurch, dass zahlreiche Informationen, beispielsweise zur aktuellen Stellung des Stufenschalters, zur Drehung und Drehrichtung der Antriebswelle usw., im Motorantrieb durch elektrische oder elektromechanische Mittel erzeugt, aber erst im räumlich oft weit entfernten Spannungsregler verarbeitet werden. Weitere Leitungen sind erforderlich, um, wie erläutert, die vom Spannungsregler gelieferten Stellbefehle auf den Motorantrieb zu führen. Schließlich müssen auch Messwandler und Spannungsregler durch elektrische Leitungen miteinander verbunden werden.

Aus der GB-PS 21 09 960 ist ein sogenannter Autotransformator bekannt, bei dem der Spannungsregler direkt am Transformator angeordnet ist, doch bleibt auch hierbei der Nachteil einer Vielzahl elektrischer Leitungsverbindungen zwischen Spannungsregler und Motorantrieb.

Aus der DE 42 14 431 A1 schließlich ist eine entsprechende Anordnung bekannt, bei der Spannungsregler und Motorantrieb statt vieler einzelner Leitungen nur über eine einzige serielle bidirektionale Datenleitung miteinander verbunden sind. Auch eine solche Datenleitung, die vorzugsweise als Lichtwellenleiter ausgeführt ist, zwischen zwei räumlich weit auseinandertiegenden Baugruppen stellt jedoch einen erheblichen Nachteil dar, zumal auch hier weitere Verbindungen zwischen dem Messwandler und dem Spannungsregler zwingend erforderlich sind - auch wenn diese in der genannten Veröffentlichung nicht besonders erwähnt werden.

Aufgabe der Erfindung ist es, eine Anordnung zur automatischen Netzbeeinflussung anzugeben, die die Nachteile des Standes der Technik, nämlich eine umfangreiche elektrische oder andere Verdrahtung zwischen getrennt angeordneten Baugruppen, vermeidet. Aufgabe der Erfindung ist es weiterhin, einen für eine solche Anordnung geeigneten Motorantrieb anzugeben.

Die Aufgaben werden erfindungsgemäß durch eine Anordnung mit den Merkmalen des ersten Patentanspruches sowie einen Motorantrieb mit den Merkmalen des nebengeordneten dritten Patentanspruches gelöst.

Besonders vorteilhaft an der erfindungsgemäßen Anordnung ist deren kompakter Aufbau. Die Anordnung besteht nach der Erfindung aus einer Einrichtung zur Erzeugung eines Spannungsistwertes, vorzugsweise einem Spannungswandler und hier wieder besonders vorteilhaft einem nichtkonventionellen Spannungswandler, direkt am Transformator, einem elektronischen Motorantrieb, der zusätzlich auch die elektrischen und elektronischen Mittel zur Spannungsregelung zur Netzbeeinflussung enthält und ebenfalls direkt am Transformator angeordnet ist und wiederum direkt mittels der üblichen Antriebswelle mit dem Stufenschalter im bzw. am Transformator mechanisch verbunden ist. Alle Baugruppen sind also direkt am Transformator angeordnet; Verdrahtungen zu und von einer räumlich entfernten Schaltwarte, an der ein separater Spannungsregler als eigenständiges Gerät bzw. 19-Zoll-Einschub nach dem Stand der Technik angeordnet ist, entfallen damit. Es ist lediglich noch eine einzige elektrische Verbindung von der Einrichtung am Transformator, z. B. dem nichtkonventionellen Spannungswandler, der das Messsignal als Spannungsistwert liefert, zum elektronischen Motorantrieb erforderlich. Die bidirektional wirkenden elektrischen Verbindungen zwischen Motorantrieb und räumlich getrenntem Spannungsregler nach dem Stand der Technik entfallen vollständig, da, wie erläutert, erfindungsgemäß der elektronische Motorantrieb die Funktion des bisherigen Spannungsreglers eben gerade mit übernimmt, dieser damit als separate Baugruppe entfällt.

Die Erfindungen sollen nachfolgend an Hand von Zeichnungen beispielhaft noch näher erläutert werden.

Es zeigen:
- Fig. 1: eine Anordnung nach dem Stand der Technik
- Fig. 2: eine erfindungsgemäße Anordnung zur Spannungsregelung zur Netzbeeinflussung
- Fig. 3: einen ersten erfindungsgemäßen Motorantrieb
- Fig. 4: einen Regelkreis einer Spannungsregelung in einer Anordnung mit dem in Figur 3 dargestellten Motorantrieb
- Fig. 5: einen zweiten erfindungsgemäßen Motorantrieb mit weiteren Mitteln zur Netzbeeinflussung
- Fig. 6: einen dritten erfindungsgemäßen Motorantrieb mit zusätzlichen Mitteln zur Netzbeeinflussung
- Fig. 7: einen Regelkreis einer Spannungsregelung in einer Anordnung mit dem in Figur 6 dargestellten Motorantrieb.

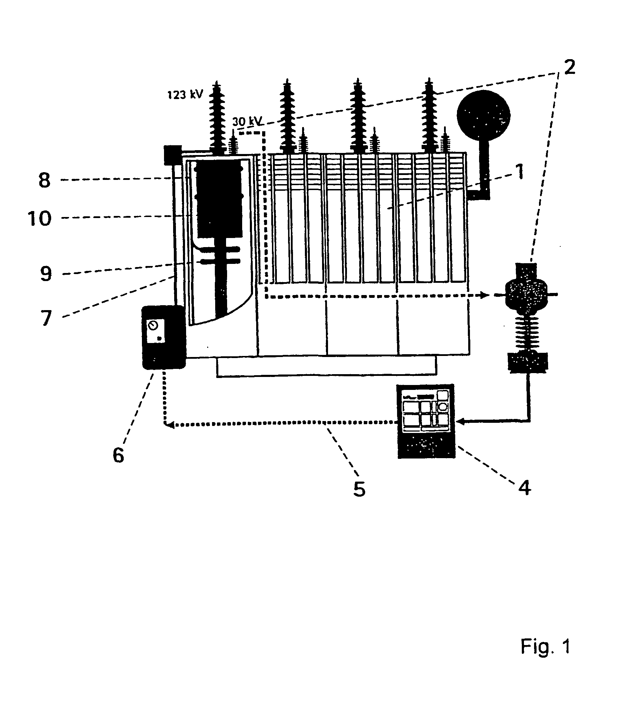

Zunächst soll an Hand von Figur 1 der bisherige Stand der Technik noch einmal kurz erläutert werden. Es ist ein Transformator 1 dargestellt, an dem ein konventioneller Spannungswandler 2 angeordnet ist, der die Ist-Spannung, als Beispiel 30 kV, in ein Messsignal von hier 100 V wandelt. Dieser Spannungswandler 2 steht über eine Messleitung 3 mit einem Spannungsregler 4 elektrisch in Verbindung, der sich in einer Schaltwarte befindet. Von diesem Spannungsregler 4 führen Steuerleitungen 5 zum Motorantrieb 6. Der Motorantrieb 6 seinerseits steht über eine Antriebswelle 7 auf bekannte Weise mit einem Stufenschalter 8 in Verbindung. Der hier gezeigte Stufenschalter 8 weist einen Wähler 9 zur leistungslosen Vorwahl der Wicklungsanzapfungen der Regelwicklung auf und besitzt darüber hinaus einen Lastumschalter 10 zur eigentlichen unterbrechungslosen Umschaltung; es sind genauso gut auch andere Bauformen von Stufenschaltern denkbar. Über die Steuerleitungen 5 werden einerseits die im Spannungsregler 4 im Ergebnis zwischen dem Vergleich der Ist-Spannung und der Soll-Spannung generierten Stellbefehle an den Motorantrieb 6 übermittelt, andererseits empfängt der Spannungsregler 4 vom Motorantrieb 6 seinerseits Informationen z. B. über die aktuelle Stellung des Stufenschalters und die bei den einzelnen Umschaltungen jeweils ablaufenden Schaltsequenzen.

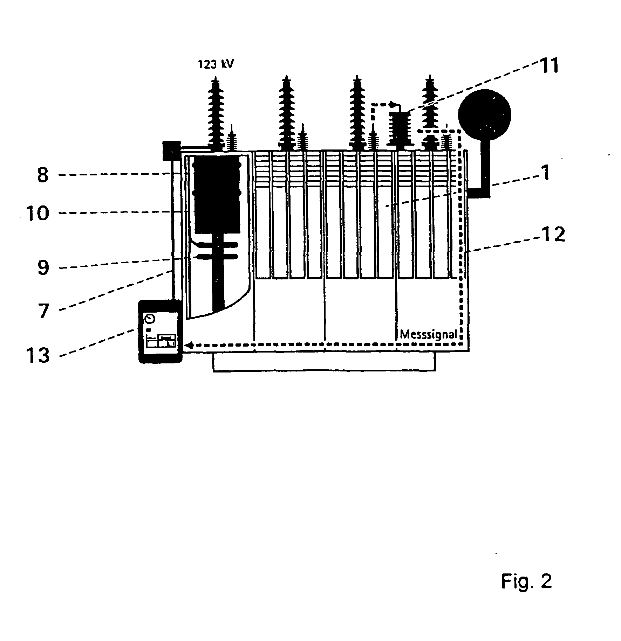

Figur 2 zeigt eine erfindungsgemäße Anordnung. Hierbei ist am Transformator 1 ein nichtkonventioneller Spannungswandler 11 angeordnet, der die Ist-Spannung, hier wieder als Beispiel 30 kV, in ein Messsignal, in diesem Fall 1,87 V, umwandelt. Eine Messleitung 12, die, entsprechend dem wesentlich geringeren Messsignal, auch geringer dimensioniert sein kann, führt zum elektronischen Motorantrieb 13. Der elektronische Motorantrieb 13 ist zusätzlich mit Mitteln zum Soll-/Istwert-Vergleich und zur Durchführung von Reglerfunktionen und Erzeugung von Steuersignalen ausgerüstet. Vom Motorantrieb 13 führt die Antriebswelle 7 wieder direkt zum Stufenschalter 8 und betätigt diesen. Es ist also zu sehen, dass der elektronische Motorantrieb 13 die Funktionen der in Figur 1 getrennt dargestellten Baugruppen Spannungsregler 4 und Motorantrieb 6 in sich vereinigt.

In besonders vorteilhafter Ausgestaltung der Erfindung wurde der nichtkonventionelle Spannungswandler 11 zur Erzeugung des Istwertes der Spannung erwähnt. Solche nichtkonventionellen Wandler wurden in den letzten Jahren zunehmend weiterentwickelt und sind dem Fachmann in vielfältigen Ausführungsformen bekannt. Eine frühe umfassende Darstellung nichtkonventioneller Wandler bzw. Messwandler findet sich bereits in der Habilitationsschrift "Ein Beitrag zur Beurteilung der Möglichkeiten des Einsatzes nichtkonventioneller Messwandler und der Grenzen für eine Verdrängung klassischer Messtransformatoren" von Dr. Ermisch, Dresden, 1984. Generelle Anforderungen an elektronische Spannungswandler nichtkonventioneller Art ergeben sich aus der IEC 38 (Sec) 122: 1993 bzw. VDE 0414. Solche nichtkonventionellen Wandler sind in den unterschiedlichsten Ausführungsformen technisch verfügbar; hingewiesen sei hier beispielsweise auf optische Wandler, d. h. faseroptische oder auch bulk-optische Wandler, die ihrerseits nach polarimetrischen (Faraday-Effekt) oder auch interferometrischen Prinzipien arbeiten. Weiterhin sind passive nichtkonventionelle Spannungswandler aus den Firmenschriften "Low Power Voltage Transducer for Medium Voltage GIS Systems Type LPVTG" und "....Type LoPoVT" der Firma Trench, CH, bekannt. Beim Typ LPVTG etwa handelt es sich um einen ohmschen Spannungsteiler, der klassische, d. h. konventionelle induktive oder kapazitive Messwandler ersetzt.

Einen Überblick über ohmsche Spannungsteiler im Vergleich mit konventionellen Spannungswandlern gibt die Zeitschrift etz, Heft 15-16/1997, Seite 20 ff.

Der nichtkonventionelle Spannungswandler 11 erzeugt ein Messsignal im Voltbereich, das annähernd leistungslos übertragen und dem elektronischen Motorantrieb 13 zugeführt wird; dieses Signal kann dort direkt weiterverarbeitet werden. Dazu weist der elektronische Motorantrieb 13 Mittel zur A/D-Umsetzung des Spannungswandlersignales auf, weiterhin besitzt er mindestens einen Resolver zur Stellungserfassung der Antriebswelle 7 sowie eine elektronische Steuerung. Die elektronische Steuerung übernimmt die Funktionen des früher separaten Spannungsreglers; sie führt einen Soll-/Ist-Wert-Vergleich durch und erzeugt unter Berücksichtigung der vorher festgelegten Regelparameter, wie etwa Schaltverzögerung, Regelschwelle u. a., ggf. ein Steuersignal, das direkt zur Betätigung der Antriebswelle 7 und damit des Stufenschalters 8 mittels eines Elektromotors dient.

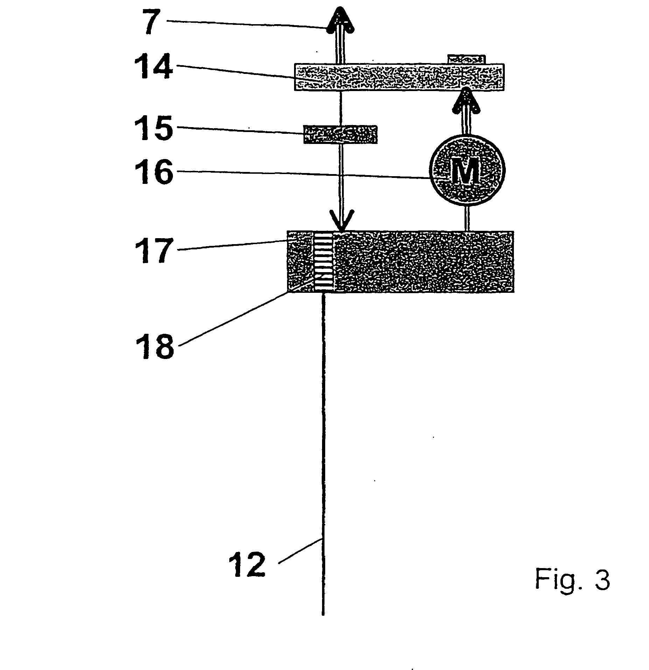

Eine erste Ausführungsform eines erfindungsgemäßen elektronischen Motorantriebes soll nachfolgend an Hand von Figur 3 detailliert erläutert werden. Der Motorantrieb weist auf an sich bekannte Weise ein Getriebe 14 zur Betätigung der Antriebswelle 7 des Stufenschalters auf. Das Getriebe 14 reduziert dabei die von einem Elektromotor 16, in der Regel einem Drehstromasynchronmotor, erzeugte Drehbewegung. Mit dem Getriebe 14 steht eine Stellungsmeldeeinrichtung 15 zur Erfassung der Position des Wählers des Stufenschalters in Verbindung. Zentraler Teil des erfindungsgemäßen Motorantriebes ist eine elektronische Steuerbaugruppe 17, die Mittel aufweist, um das vom Spannungswandler kommende Messsignal mit einem vorgegebenen Sollwert zu vergleichen und bei einer Abweichung, die eine voreinstellbare Schwelle überschreitet, ein Steuerkommando auszulösen und den Elektromotor 16 drehrichtungsabhängig anzusteuern, um damit in unmittelbarer Folge den Stufenschalter über dessen Antriebswelle 7 zu betätigen. Die elektronische Steuerbaugruppe 17 ihrerseits steht über eine Interfacebaugruppe 18 mit der weiter oben bereits ausführlich beschriebenen einzigen Messleitung 12, die die Informationen vom nichtkonventionellen Spannungswandler übermittelt, in Verbindung.

Die Steuerbaugruppe 17 besteht im Wesentlichen aus einer speicherprogrammierbaren Steuerung, einem Mikrocontroller oder auch einem Industriecomputer. Welche dieser Möglichkeiten gewählt wird, hängt von einer Vielzahl von Faktoren, wie Platzbedarf, Kosten, Arbeitsgeschwindigkeit, ab; eine entsprechende Auswahl ist dem Fachmann geläufig.

Die Interfacebaugruppe 18 enthält einen A/D-Umsetzer und weitere Mittel zur Erzeugung eines steuerbaugruppenkonformen Messsignales aus dem in der Messleitung 12 übermittelten Messsignal. Sie stellt somit eine digitale Schnittstelle für die nachgeordnete Steuerbaugruppe 17 dar und kann etwa als Feldbus oder als bekannte RS 485-Schnittstelle ausgeführt werden.

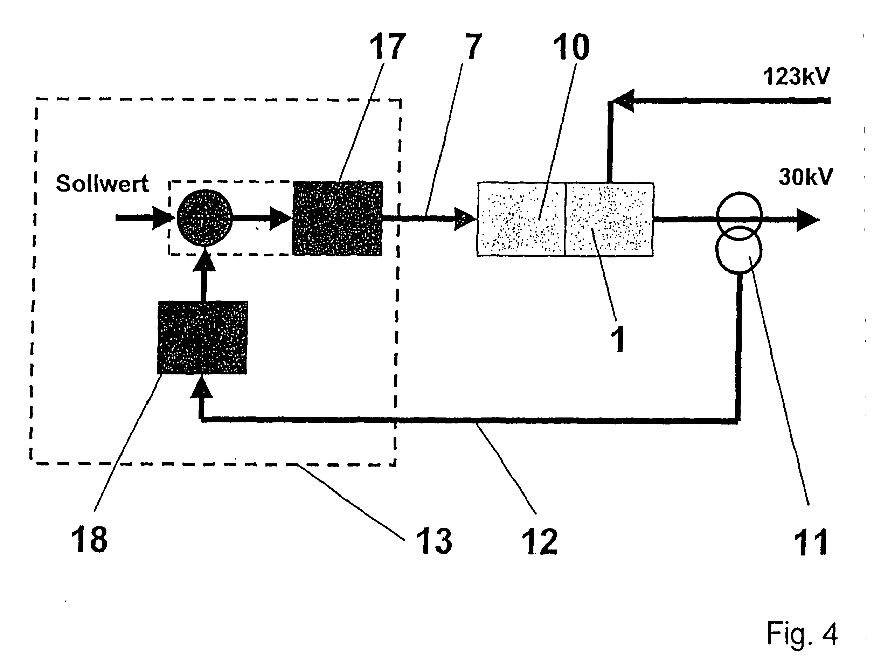

In Figur 4 ist ein entsprechender Regelkreis mit einem solchen Motorantrieb noch einmal separat dargestellt. Vom nichtkonventionellen Spannungswandler 11 wird das Messsignal als Maß für den Istwert am Transformator 1 über die Messleitung 12 zur Interfacebaugruppe 18 des Motorantriebes 13, der als Strichlinie angedeutet ist, übertragen. Der Interfacebaugruppe 18 nachgeordnet ist die Steuerbaugruppe 17, in der ein Soll-/Istwertvergleich, d. h. ein Vergleich des vom nichtkonventionellen Spannungswandler 11 übermittelten Istwertes mit dem vorab gespeicherten Sollwert, erfolgt. Ergibt dieser Vergleich eine Abweichung, deren Wert eine vorab einstellbare Regelschwelle überschreitet, so wird ein Steuerkommando erzeugt, wodurch der Elektromotor 16 betätigt wird, der seinerseits in der Folge die Antriebswelle 7 betätigt. Damit wird der Lastumschalter 10 des Stufenschalters betätigt und die Sekundärspannung des Transformator 1 ändert sich. Durch eine erneute Messung über den nichtkonventionellen Spannungswandler 11 und Rückmeldung an die Steuerbaugruppe 17 ist der Regelkreis geschlossen.

Es ist im Rahmen der Erfindung auch möglich, statt des nichtkonventionellen Spannungswandlers 11 einen anderen Messwandler vorzusehen oder auch die Informationen über den Istwert der Spannung einem Bus-System zu entnehmen.

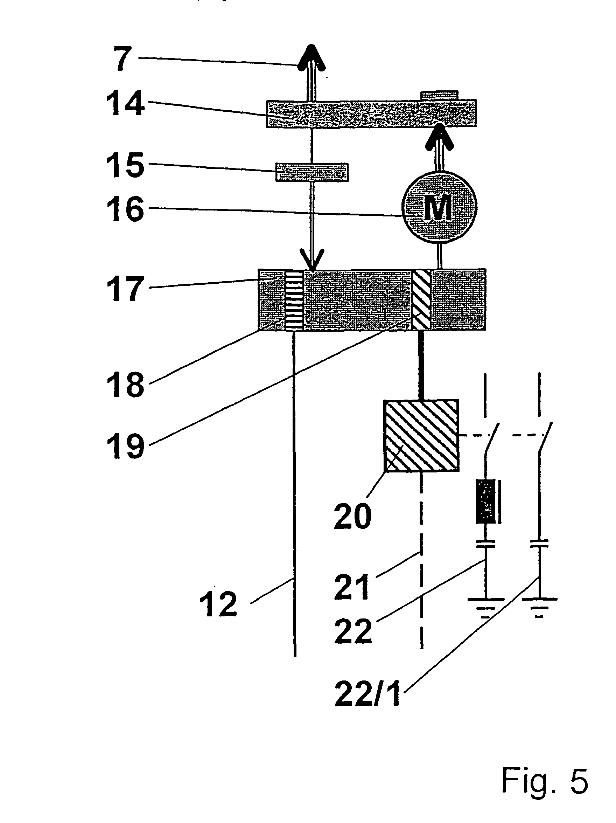

In Figur 5 ist eine zweite Ausführungsform eines erfindungsgemäßen Motorantriebes dargestellt. Hierbei ist als zusätzliche Möglichkeit zur Netzbeeinflussung eine Analyse der Spannungsqualität der entsprechenden Spannung, die geregelt werden soll, vorgesehen. Dabei wird die Ausgangsspannung des nichtkonventionellen Spannungswandlers 11 zusätzlich über eine weitere Messleitung 21 einem Blindleistungsregler 20 zugeführt. Es ist natürlich auch möglich, von der ohnehin vorhandenen Messleitung 12 das Messsignal abzuzweigen. Ein solcher Blindleistungsregler 20 steht etwa als Gerät "POCOS-Control", hergestellt von der Anmelderin, in kommerzieller Ausführung zur Verfügung. Sein Ausgang führt über eine weitere Interfacebaugruppe 19 wiederum zur elektronischen Steuerbaugruppe 17. Es ist jedoch auch möglich, den Blindleistungsregler 20 selbst als integralen Bestandteil der Steuerbaugruppe 17 auszubilden. In Verbindung mit einer direkten Spannungsregelung kann damit zusätzlich einer unzulässigen Spannungsüberhöhung durch eine mögliche Überkompensation des zu regelnden Spannungsnetzes unmittelbar entgegengewirkt werden. Eine solche, als Ferranti-Effekt aus der Literatur bekannte Spannungsüberhöhung am Ende einer z.B. leer laufenden Leitung resultiert aus dem komplexen Verhältnis der Spannungen am Anfang und am Ende dieser Leitungen, wobei dieses Verhältnis hier eine reelle Größe darstellt. Ein- und Ausgangsspannung sind in diesem Fall durch die gleiche Phasenlage gekennzeichnet, so dass der kapazitive Ladestrom an der Leitungsinduktivität einen Spannungsbetrag erzeugt, der sich zur Eingangsspannung addiert, derart, dass damit die Ausgangsspannung größer als die Eingangsspannung dieser Leitung wird. Auf der Basis verschiedener vorgegebenen Sollwerte, wie z.B. des Verschiebungsfaktors cos ϕ oder des zulässigen Oberwellengehaltes der gemessenen Spannung, erfolgt das Zu- oder Abschalten der Kondensatoren 22/1 bzw. Saugkreise 22 über den Blindleistungsregler 20. Durch eine solche stufig schaltbare Kompensations-, d. h. Kondensatoranlage ist ebenfalls eine Spannungsregelung und damit Netzbeeinflussung möglich. Dabei bedingt der kapazitive Blindstrom der Kompensationsanlage eine Spannungsanhebung an der vorwiegend induktiven Impedanz des Einspeiseweges des Netzes, wenn die bereitgestellte kapazitive Blindleistung nicht ausschließlich zur Kompensation induktiver Blindleistung von Abnehmern im Netz benötigt wird. Diese Regelmethode ist dann besonders sinnvoll, wenn der durch einen stark veränderlichen induktiven Blindleistungsbedarf verursachte Längsspannungsabfall weitgehend konstant gehalten werden soll. Ein besonders ausgebildetes solches Kompensationssystem ist in der WO 94/24622 beschrieben.
Es ist auch möglich, zur Netzbeeinflussung sowohl Stufenschalter als auch Blindleistungskompensationssysteme parallel zu verwenden. Beide Gerätegattungen können dabei durch den erfindungsgemäßen, vorstehend beschriebenen Motorantrieb zur automatischen Netzbeeinflussung gleichzeitig aktiviert werden. Die üblicherweise verwendeten Blindleistungsregler dienen dabei zur groben Regelung; sie besitzen Regelzeitkonstanten von 10...30 Minuten, so dass sie nicht mit den Regelalgorithmen der schneller arbeitenden Stufenschalter kollidieren.

Die elektronische Steuerbaugruppe 17 kann daneben auch weitere Baugruppen für die Realisierung von Monitoring-Funktionen oder etwa zur Steuerung von Lüftern am Transformator 1 aufweisen.

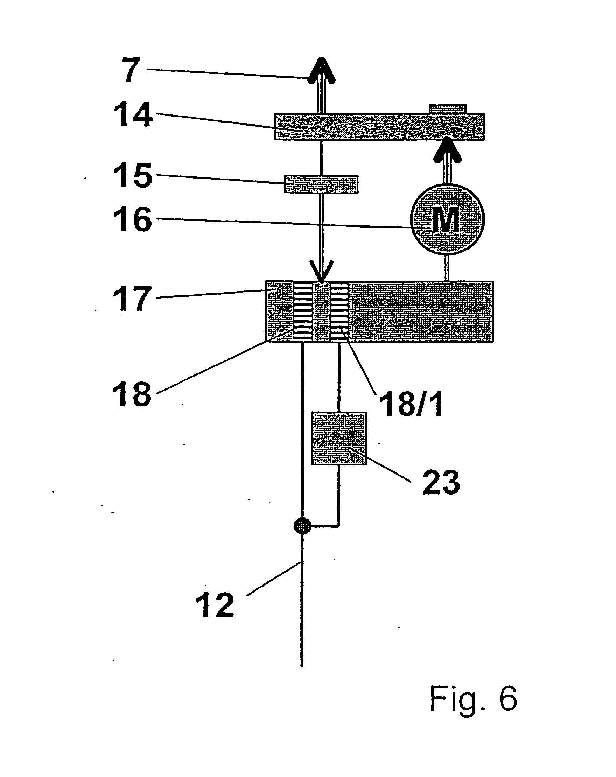

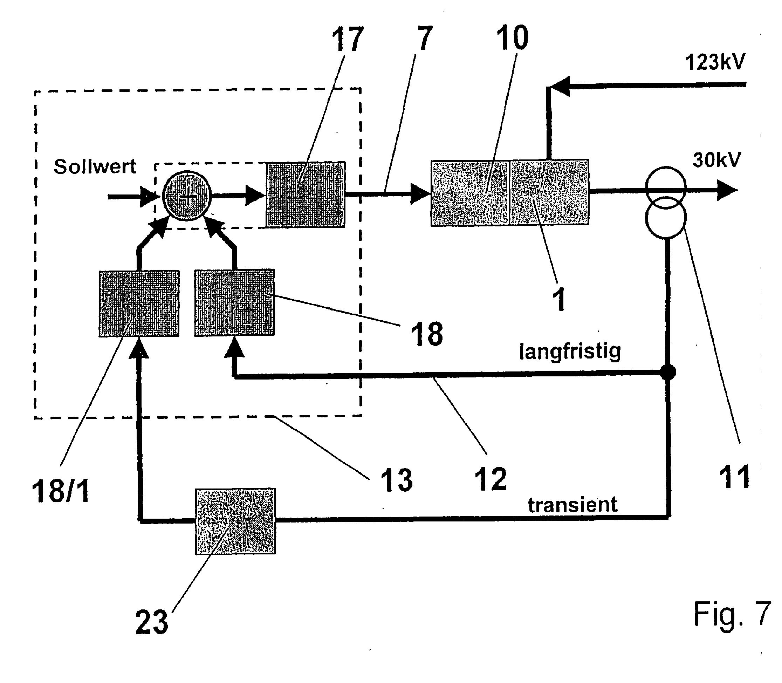

In den Figuren 6 und 7 ist eine besonders vorteilhafte weitere Ausführungsform der Erfindung dargestellt. Dabei weist die Steuerbaugruppe 17 zusätzlich zur bereits beschriebenen Interface-Baugruppe 18 eine weitere Interface-Baugruppe 18/1 auf, die mit einer mit hoher Geschwindigkeit arbeitenden weiteren Messanordnung 23 in Verbindung steht. Eine solche schnelle Messanordnung 23 wird, ebenfalls von der Anmelderin, unter der Bezeichnung "Voltage Dip Meter" hergestellt. Damit wird die Steuerbaugruppe 17 in die Lage versetzt, auch transient auftretende Spannungseinbrüche kurzer Dauer zu erkennen und zu verarbeiten, um gegebenenfalls die vom Transformator abgegebene Höhe der geregelten Spannung zu beeinflussen. Eine solche schnelle Spannungsregelung zur raschen Netzbeeinflussung kann z. B. mit an sich bekannten schnell regelnden leistungselektronischen Netzelementen, sog. FACTS-Elementen, erfolgen. FACTS ermöglichen gezielt die Beeinflussung von Wirk- und Blindleistungseinflüssen und die rasche Aktivierung einer Wirk- und Blindleistungsbeeinflussung mit hoher Regeldynamik. Ebenso sind schnelle Vollthyristor-Stufenschalter für die rasche Ausregelung von Spannungseinbrüchen geeignet. Solche Stufenschalter sind z.B. aus der WO 95/27931 oder der WO 97/05536 bekannt. Auch die Ansteuerung der beschriebenen schnell regelnden Bauelemente ist mitttels der erfindungsgemäßen Anordnung zur Netzbeeinflussung auf einfache Weise möglich.

Nach einer weiteren Ausführungsform der Erfindung ist es auch möglich, dass die elektronische Steuerbaugruppe 17 auch zur Betätigung einer Erdschlussspule dient. Dieses Prinzip der Erdschlusslöschung bzw. -regelung mittels einer Erdschlussspule ist dem Fachmann bekannt. Es beruht darauf, dass an einer Fehlerstelle der kapazitive Anteil des Fehlerstromes durch den induktiven Strom der Erdschlussspule kompensiert werden kann. Dadurch fließt bei idealer Kompensation nur ein sehr kleiner ohmscher Reststrom. Bei der Regelung werden zwei Verfahren unterschieden: Zum einen die Regelung bei vemachlässigbarer Netzrückwirkung bei größeren Verlagerungsspannungen, zum anderen die Regelung bei nicht vernachlässigbarer Netzrückwirkung, d. h. Änderungen im Netz, die sich auf die Verlagerungsspannung auswirken. Die Regelung selbst erfolgt auf an sich bekannte Weise durch Verstellung der Induktivität der Erdschlussspule.

## Patentansprüche

1. Anordnung zur automatischen Netzbeeinflussung mit einem Stufentransformator, dessen Regelwicklung mit verschiedenen Wicklungsanzapfungen versehen ist, die von einem Stufenschalter mit einem mechanisch mit diesem gekoppelten Motorantrieb unterbrechungslos beschaltbar sind,
wobei am Stufentransformator ein Messwandler zur Erfassung des Istwertes der jeweils zu regelnden Spannung angeordnet ist,
wobei Mittel zum Vergleich des solcherart gemessenen Istwertes mit einem vorab festgelegten Sollwert und zur vergleichsabhängigen Erzeugung eines Stellbefehles zur drehrichtungsabhängigen Betätigung des Motorantriebes und damit des Stufenschalters vorgesehen sind,
**dadurch gekennzeichnet,**
**dass** der Motorantrieb (13) auch die Mittel zum Vergleich des gemessenen Istwertes mit dem vorab festgelegten Sollwert und zur Erzeugung des vergleichsabhängigen Stellbefehles enthält
und **dass** eine einzige elektrische Messleitung (12) direkt vom Messwandler zum Motorantrieb (13) führt.

2. Anordnung nach Anspruch 1,
**dadurch gekennzeichnet,**
**dass** der Messwandler ein nichtkonventioneller Spannungswandler (11) ist.

3. Anordnung nach Anspruch 1 oder 2,
**dadurch gekennzeichnet,**
**dass** bei dem Motorantrieb (13) in einem gemeinsamen Gehäuse ein Elektromotor (16) vorgesehen ist, der über ein zwischengeschaltetes Getriebe (14) eine Antriebswelle (7) betätigt, die ihrerseits den Stufenschalter antreibt,
**dass** weiterhin eine Steuerbaugruppe (17) im gemeinsamen Gehäuse vorgesehen ist, die über eine Interfacebaugruppe (18) mit einer Messleitung (12) eines außerhalb des Gehäuses befindlichen Messwandlers in Verbindung steht,
**dass** die Steuerbaugruppe (17) Mittel aufweist, um ein vom Messwandler generiertes, über die Messleitung (12) kommendes Messsignal mit einem vorab gespeicherten Sollwert zu vergleichen und vergleichsabhängig ein Regelsignal zu erzeugen
und **dass** durch die Steuerbaugruppe (17) direkt drehrichtungsabhängig der Elektromotor (16) betätigbar ist.

4. Anordnung nach Anspruch 3,
**dadurch gekennzeichnet,**
**dass** der Messwandler ein nichtkonventioneller Spannungswandler (11) ist.

5. Anordnung nach Anspruch 3 oder 4,
**dadurch gekennzeichnet,**
**dass** im gemeinsamen Gehäuse des Motorantriebes (13) zusätzlich ein Blindleistungsregler (20) vorgesehen ist, dessen Eingang ebenfalls mit dem außerhalb des Gehäuses befindlichen Messwandler in Verbindung steht
und **dass** der Ausgang des Blindleistungsreglers (20) über eine weitere Interfacebaugruppe (19) ebenfalls mit der Steuerbaugruppe (17) in Verbindung steht.

6. Anordnung nach Anspruch 3 oder 4 oder 5,
**dadurch gekennzeichnet,**
**dass** eine schnelle Messanordnung (23) zur Erfassung transienter Spannungseinbrüche vorgesehen ist, deren Ausgang über eine weitere Interface-Baugruppe (18/1) wiederum mit der Steuerbaugruppe (17) in Verbindung steht.

7. Anordnung nach Anspruch 3 oder 4 oder 5 oder 6,
**dadurch gekennzeichnet,**
**dass** durch die Steuerbaugruppe (17) zusätzlich Mittel zur schnellen Netzbeeinflussung, insbesondere FACTS-Elemente oder schnelle Halbleiter-Stufenschalter, betätigbar sind.

8. Anordnung nach Anspruch 3 oder 4 oder 5 oder 6 oder 7,
**dadurch gekennzeichnet,**
**dass** zusätzliche Mittel zur Betätigung einer Erdschlussspule vorgesehen sind.

## Revendications

1. Dispositif pour influencer automatiquement un réseau, comprenant un transformateur à gradins dont le bobinage de réglage est muni de différentes prises de bobinage qui peuvent être activées sans interruption par un commutateur à gradins avec un entraînement motorisé couplé mécaniquement à celui-ci, avec un convertisseur de mesure disposé sur le transformateur à gradins pour détecter la valeur réelle de la tension respectivement à régler, et avec des moyens prévus pour comparer la valeur réelle ainsi mesurée avec une valeur de consigne prédéterminée et pour générer, en fonction de la comparaison, un ordre de réglage pour l'actionnement de l'entraînement motorisé en fonction du sens de rotation et donc du commutateur à gradins,
**caractérisé en ce que**
l'entraînement motorisé (13) contient également les moyens pour comparer la valeur réelle mesurée avec la valeur de consigne prédéterminée et générer l'ordre de réglage en fonction de la comparaison, et
une seule ligne de mesure électrique (12) s'étend directement du convertisseur de mesure à l'entraînement motorisé (13).

2. Dispositif selon la revendication 1,
**caractérisé en ce que**
le convertisseur de mesure est un convertisseur de tension (11) non conventionnel.

3. Dispositif selon la revendication 1 ou 2,
**caractérisé en ce que**
pour l'entraînement motorisé (13), un moteur électrique (16) prévu dans un boîtier commun, actionne par un engrenage (14) interposé un arbre moteur (7) qui entraîne de son côté le commutateur à gradins,
un ensemble de commande (17) en outre prévu dans le boîtier commun, est relié par un ensemble d'interface (18) avec une ligne de mesure (12) d'un convertisseur de mesure situé à l'extérieur du boîtier,
l'ensemble de commande (17) présente des moyens pour comparer un signal de mesure généré par le convertisseur de mesure arrivant par la ligne de mesure (12) avec une valeur de consigne préalablement mémorisée et pour générer un signal de régulation en fonction de la comparaison, et
le moteur électrique (16) peut être actionné directement par l'ensemble de commande (17) en fonction du sens de rotation.

4. Dispositif selon la revendication 3,
**caractérisé en ce que**
le convertisseur de mesure est un convertisseur de tension (11) non conventionnel.

5. Dispositif selon la revendication 3 ou 4,
**caractérisé en ce qu'**
un compensateur automatique du cos ϕ (20), dont l'entrée est également en communication avec le convertisseur de mesure situé à l'extérieur du boîtier, est en outre prévu dans le boîtier commun de l'entraînement motorisé (13), et
la sortie du compensateur automatique du cos ϕ (20) est également en communication par un autre ensemble d'interface (19) avec l'ensemble de commande (17).

6. Dispositif selon la revendication 3, 4 ou 5,
**caractérisé en ce qu'**
un dispositif de mesure rapide (23) est prévu pour détecter des baisses de tension transitoires, et sa sortie est en communication par un autre ensemble d'interface (18/1) avec l'ensemble de commande (17).

7. Dispositif selon la revendication 3, 4, 5 ou 6,
**caractérisé en ce que**
l'ensemble de commande (17) permet d'actionner des moyens supplémentaires pour influencer le réseau rapidement, en particulier des éléments FACTS ou des commutateurs à gradins à semi-conducteur rapides.

8. Dispositif selon la revendication 3, 4, 5, 6 ou 7,
**caractérisé en ce que**
des moyens supplémentaires sont prévus pour actionner une bobine de mise à la terre.

## Claims

1. Arrangement for automatic mains influencing with a tapped transformer, the regulating winding of which is provided with different winding taps which are connectible without interruption by a tap changer having a motor drive mechanically coupled therewith, wherein a measurement transducer for detection of the actual value of the respective voltage to be regulated is arranged at the tapped transformer, wherein means are provided for comparison of the actual value measured in such a manner with a previously established target value and for generating, in dependence on the comparison, a setting command for actuation of the motor drive and thus of the tap changer in dependence on rotational direction, **characterised in that** the motor drive (13) also comprises means for comparison of the measured actual value with the previously established target value and for generation of the setting command dependent on the comparison and that a single electrical measurement line (12) leads directly from the measurement transducer to the motor drive (13).

2. Arrangement according to claim1, **characterised in that** the measurement transducer is a non-conventional voltage transducer (11).

3. Arrangement according to claim 1 or 2, **characterised in that** in the case of the motor drive (13), an electric motor (16) is provided in a common housing and actuates, by way of an interposed transmission (14), a drive shaft (7) which in turn drives the tap changer, that in addition a control subassembly (17) is provided in the common housing and is disposed in connection by way of an interface subassembly (18) with a measurement line (12) of a measurement transducer disposed outside the housing, and that the control subassembly (17) comprises means in order to compare a measurement signal, which is generated by the measurement transducer and arrives by way of the measurement line (12), with a previously stored target value and to generate a regulating signal in dependence on the comparison and that the electric motor (16) is directly actuable by the control subassembly (17) in dependence on rotational direction.

4. Arrangement according to claim 3, **characterised in that** the measurement transducer is a non-conventional voltage transducer (11).

5. Arrangement according to claim 3 or 4, **characterised in that** a reactive power compensator (20) is additionally disposed in the common housing of the motor drive (13), the input of the reactive power compensator (20) being similarly disposed in connection with the measurement transducer disposed outside the housing and the output of the reactive power compensator (20) being similarly disposed in connection with the control subassembly (17) by way of a further interface subassembly (19).

6. Arrangement according to claim 3, 4 or 5, **characterised in that** a fast measuring arrangement (23) for detection of transient voltage incursions is provided, the output of the measuring arrangement in turn being disposed in connection with the control subassembly (17) by way of a further interface subassembly (18/1).

7. Arrangement according to claim 3, 4, 5 or 6, **characterised in that** additional means for rapid mains influencing, in particular FACTS elements or rapid semiconductor tap changers, are actuable by the control subassembly (17).

8. Arrangement according to claim 3,4, 5, 6 or 7, **characterised in that** additional means for actuation of an earth leakage coil are provided.
